# FASCICULE DE BREVET EUROPEEN

(11) **EP 2 593 646 B1**
(45) Date de publication et mention de la délivrance du brevet: **13.04.2016**
(21) Numéro de dépôt: 11743851.5
(22) Date de dépôt: 12.07.2011
(51) Int. Cl.: F02B 37/04, F02B 39/04, F02B 39/12, F16H 7/02

(54) **DISPOSITIF DE TRANSMISSION D'UN COUPLE MECANIQUE ENTRE UN ORGANE MENANT ET UN ORGANE MENE ET SYSTEME DE COMPRESSION DE L'AIR D'ALIMENTATION D'UN MOTEUR UTILISANT UN TEL DISPOSITIF**
VORRICHTUNG ZUR ÜBERTRAGUNG DES MECHANISCHEN DREHMOMENTS ZWISCHEN EINEM ANTRIEBSELEMENT UND EINEM ANGETRIEBENEN ELEMENT SOWIE LUFTVERDICHTUNGSSYSTEM ZUR ENERGIEVERSORGUNG EINES MOTORS MIT EINER DERARTIGEN VORRICHTUNG
DEVICE FOR TRANSMITTING MECHANICAL TORQUE BETWEEN A DRIVING MEMBER AND A DRIVEN MEMBER, AND AIR-COMPRESSION SYSTEM FOR SUPPLYING POWER TO AN ENGINE USING SUCH A DEVICE

(30) Priorité: 12.07.2010 FR 1055682
(43) Date de publication de la demande: 22.05.2013
(73) Titulaire: Valeo Systèmes de Contrôle Moteur, 95892 Cergy Pontoise (FR)
(72) Inventeur: CHENG, Thierry, F-78610 Les Brevieres (FR); SEGA, Patrick, F-78600 Maison Lafitte (FR); ALFANO, Damien, F-95892 Cergy Pontoise (FR)
(86) Numéro de dépôt international: PCT/FR2011/051665
(87) Numéro de publication internationale: WO 2012/007687

(56) Documents cités:
- US-A- 5 890 468
- US-A1- 2007 193 563
- KREBS R ET AL: "Neuer Ottomotor mit Direkteinspritzung und Doppelaufladung von Volkswagen. Teil 2: Thermodynamik", MTZ MOTORTECHNISCHE ZEITSCHRIFT, VIEWEG VERLAG, WIESBADEN, DE, vol. 66, no. 12, 1 décembre 2005 (2005-12-01), pages 978-986, XP001519206, ISSN: 0024-8525

## Description

La présente invention concerne un dispositif de transmission d'un couple mécanique entre un organe menant et un organe mené, notamment entre un moteur et un compresseur d'air d'alimentation du moteur. Elle concerne également un système de compression de l'air d'alimentation d'un moteur, notamment d'un moteur essence. Elle trouvera ses applications, en particulier, dans le domaine des véhicules automobiles.

Aujourd'hui, l'on tente de proposer des motorisations essence présentant, pour des moteurs ayant une cylindrée réduite, des performances proches de moteurs de plus grosse cylindrée. On peut ainsi équiper des voitures avec de plus petits moteurs, ce qui va autoriser une diminution de la consommation de carburant et des émissions de gaz à effet de serre, tout en maintenant leur agrément de conduite.

Pour cela, les moteurs sont équipés de turbo compresseurs, c'est-à-dire, d'une turbine, entrainée par les gaz d'échappement du moteur, liée en rotation à un compresseur, comprimant l'air d'alimentation du moteur.

Si de telles solutions permettent d'obtenir des performances satisfaisantes pour les véhicules ayant atteint une certaine vitesse, elles posent encore problème pour le décollage du véhicule, c'est-à-dire, le passage d'une situation dans laquelle le véhicule est à l'arrêt, moteur tournant au ralenti, à une situation où le véhicule est lancé à une vitesse suffisante.

Une explication pouvant être donnée à ce phénomène est que les turbos compresseurs ne sont vraiment efficaces qu'à partir d'un certain régime moteur, régime d'autant plus élevé que la cylindrée est petite, en raison des débits de gaz d'échappement associés.

Il existe ainsi un besoin, pour les véhicules de cylindrée réduite, d'une solution permettant de compléter l'action du turbo compresseur à bas régime moteur.

A ce sujet, il est connu des compresseurs à entrainement électriques. Ils nécessitent cependant une source d'alimentation et des dispositifs de commande complexes et coûteux.

Il est aussi connu des compresseurs d'appoint, entrainés par la courroie du moteur dans le but d'augmenter ses performances. Ils opèrent cependant sur toute la gamme du régime de fonctionnement du moteur, en particulier à haut régime, ce qui les oblige à présenter des caractéristiques spécifiques.

La publication "Neuer Ottomotor mit Direkteinspritzung und Doppelaufladung von Volkswagen. Teil 2: Thermodynamik" de Krebs R; at al. publiée dans MTZ Motortechnische Zeitschrift, 20051201 VIEWEG VERLAG, WIESBADEN, DE Vol.66, N°12, pages978 - 986 décrit un turbocompresseur avec un dispositif selon le préambule de la revendication 1.

L'invention a pour but de pallier ces difficultés et propose à cette fin un système de compression de l'air d'alimentation d'un moteur thermique, notamment de véhicule automobile, comprenant un compresseur, notamment centrifuge, et un dispositif de transmission de couple, permettant de prélever un couple sur une courroie entrainée par un vilebrequin du moteur et de transmettre ledit couple au compresseur.

Ladite courroie est constituée, par exemple, par une courroie accessoire du moteur. On entend par là une courroie entraînée par le vilebrequin du moteur et servant à entrainer différents accessoires, par exemple, pompes de circuit de refroidissement moteur, compresseur de climatisation ou autres.

Selon l'invention, ledit dispositif de transmission est apte à transmettre ledit couple avec un premier rapport de transmission jusqu'à un certain seuil de régime moteur et à ne plus le transmettre ou à le transmettre avec un rapport de transmission plus faible au dessus dudit seuil. Ce dernier est compris, par exemple, entre 2000 et 3000 tr/min. Il est, notamment, d'environ 2500 tr/min. Ledit dispositif de transmission est conforme au dispositif de transmission selon l'invention.

On dispose ainsi d'une solution qui ne va plus solliciter le compresseur à haut régime. Il peut donc être dimensionné pour être fiable sans avoir à mettre en oeuvre les solutions complexes rencontrées dans les dispositifs devant tournés à très grande vitesse. Il s'agit de la sorte d'une solution simple et robuste permettant de seconder un turbo compresseur, précisément dans la plage où il n'est que peu ou pas efficace.

Il a d'ailleurs été constaté à cette occasion qu'il y avait un besoin général pour des dispositifs de transmission fiables et peu coûteux pour transmettre un couple mécanique entre un organe menant et un organe mené quand l'organe mené ne doit pas ou n'a pas besoin d'être entrainé à haut régime.

Et l'invention concerne également un dispositif de transmission d'un couple mécanique entre un organe menant et un organe mené, notamment entre un moteur et un compresseur d'air d'alimentation du moteur, ledit dispositif de transmission comprenant au moins une poulie de transmission du couple entre l'organe menant et l'organe mené et des moyens de débrayage agissant sur au moins l'une desdites poulies pour permettre une transmission du couple entre l'organe menant et l'organe mené, lorsqu'ils sont dans un état embrayé, ou non, lorsqu'ils sont dans un état débrayé. Le dispositif selon l'invention comprend une poulie, dite seconde poulie d'entrée, apte à fonctionner en roue libre, et ledit dispositif étant configuré pour que ladite seconde poulie d'entrée puisse transmettre le couple moteur à l'organe mené lorsque lesdits moyens de débrayages sont dans un état débrayé.

L'invention permet d'entrainer l'organe mené à deux vitesses différentes pour une même vitesse de rotation de l'organe menant.

Selon différents modes de réalisation :
- les moyens de débrayage comprennent un premier organe rotatif, apte à être entrainé en rotation par l'organe menant et des premiers moyens d'accouplement / désaccouplement en rotation de l'une desdites poulies, dite première poulie à embrayage, avec ledit premier organe rotatif,
- les premiers moyens d'accouplement / désaccouplement comprennent une bobine générant un champ électromagnétique, ledit premier organe rotatif, ladite première poulie à embrayage et ladite bobine étant configurés pour permettre l'entrainement de ladite poulie par ledit organe rotatif lorsque ladite bobine est alimentée en courant électrique,
- l'une de la ou desdites poulies, dites poulies de changement de régime, présentent un rapport de réduction et/ou de démultiplication permettant d'entrainer l'organe mené à une vitesse différente de celle de l'organe menant,
- ladite première poulie à embrayage est la ou l'une des poulies de changement de régime,
- la première poulie à embrayage est apte à entrainer l'organe mené,
- ledit dispositif comprend une courroie additionnelle reliée à ladite première poulie à embrayage, ladite courroie additionnelle étant apte à être reliée à l'organe mené,
- l'une desdites poulies, dite première poulie d'entrée, et ladite première poulie à embrayage sont montées libres en rotation autour d'un même arbre, ladite première poulie à embrayage étant liée en rotation à ladite première poulie d'entrée,
- ladite première poulie d'entrée est la ou l'une des poulies de changement de régime,
- ledit premier organe rotatif ou la ou l'une des poulies, notamment la première poulie d'entrée, est prévue apte à être entrainée par l'organe menant,
- ladite première poulie d'entrée est une poulie apte à fonctionner en roue libre.
- ladite seconde poulie d'entrée présente un rapport de réduction et/ou de démultiplication différent de celui présenté par le dispositif quand le couple est transmis par les moyens de débrayage,
- ladite seconde poulie d'entrée est apte à être entrainée par l'organe menant,
- ladite seconde poulie d'entrée est apte à être liée en rotation à l'organe mené,
- le dispositif comprend une troisième poulie, liée en rotation à la seconde poulie d'entrée et entrainée en rotation par ladite première poulie à embrayage, et des moyens de débrayage supplémentaires, prévus entre

ladite troisième poulie et l'organe mené de façon à permettre l'entrainement de l'organe mené par ladite troisième poulie ou non,
- les moyens de débrayage supplémentaires comprennent un second -organe rotatif, apte à être lié en rotation à l'organe mené et des seconds moyens d'accouplement / désaccouplement en rotation de ladite troisième poulie avec ledit second organe rotatif.

Dans l'application au système de compression d'air évoqué plus haut l'organe menant est la courroie du moteur et l'organe mené est une roue d'entrée d'un dispositif de démultiplication du compresseur. Selon différents modes de réalisation :
- le dispositif de démultiplication présente un rapport de démultiplication dont la valeur est située entre 10 et 15 et/ou la ou lesdites poulies de changement de régime du dispositif de transmission assurent un rapport de démultiplication d'environ 6 entre la courroie et la roue d'entrée du dispositif de démultiplication du compresseur,
- les moyens de débrayage sont configurés pour autoriser une transmission du couple entre le moteur et le compresseur jusqu'à un régime moteur seuil,
- le régime moteur seuil est compris entre 2000 et 3000 tr/min, notamment 2500 tr/min.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre de façon schématique un exemple de réalisation d'un système de compression conforme à l'invention,
- la figure 2 illustre de façon schématique un premier exemple de réalisation d'un dispositif de transmission du système de compression de la figure 1,
- les figures 3a et 3b illustrent de façon schématique l'utilisation du dispositif de la figure 2 selon un état embrayé et un état débrayé de ses moyens de débrayage,
- la figure 4 illustre de façon schématique une variante de réalisation du dispositif de la figure 2,
- les figures 5a et 5b illustrent de façon schématique l'utilisation du dispositif de la figure 4 selon un état embrayé et un état débrayé de ses moyens de débrayage,
- la figure 6 illustre de façon schématique une autre variante de réalisation du dispositif de la figure 2,
- les figures 7a, 7b et 7c illustrent de façon schématique l'utilisation du dispositif de la figure 6 selon différents états de ses divers moyens de débrayage.

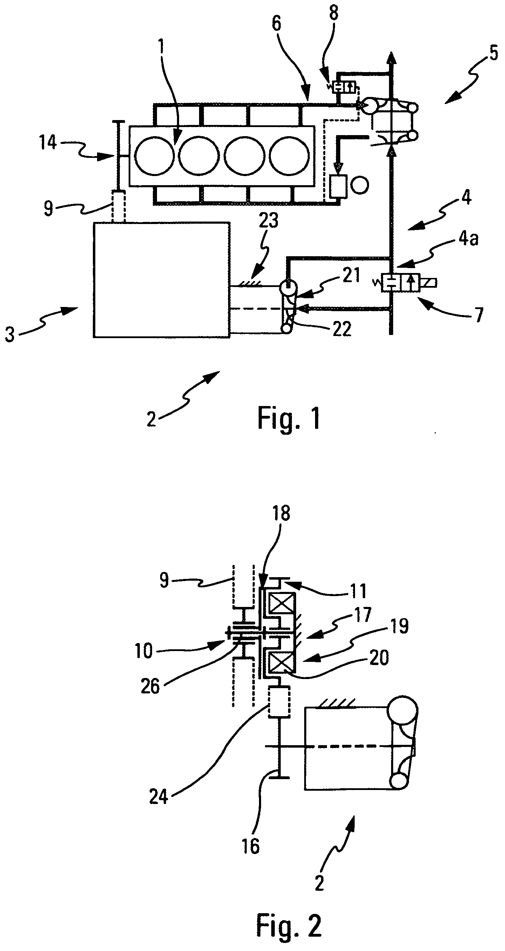

Comme illustré à la figure 1, l'invention concerne tout d'abord un système de compression d'air d'alimentation d'un moteur thermique 1, notamment de véhicule automobile, comprenant un compresseur 2 et un dispositif de transmission de couple 3.

Le compresseur 2 est situé, par exemple, le long d'une ligne 4 d'alimentation en air du moteur 1 ou ligne d'admission en air. Ladite ligne d'alimentation en air comprend en outre, par exemple, un turbo compresseur 5, entraîné à partir de l'énergie cinétique des gaz d'échappement du moteur circulant dans une ligne d'échappement 6.

Ledit compresseur 2 est situé, notamment, en amont du turbo compresseur 5 selon le sens d'écoulement de l'air d'admission. Il pourra être monté en dérivation d'une partie principale 4a de la ligne d'admission en air. Une vanne 7 est alors éventuellement prévue pour diriger l'air d'admission, soit à travers le compresseur 2, soit à travers ladite partie principale 4a.

A l'échappement, une vanne 8 pourra aussi être prévue pour permettre au gaz d'échappement de ne pas passer par la turbine du turbo compresseur 5.

Selon l'invention, le dispositif de transmission de couple 3 permet de prélever un couple sur une courroie 9 du moteur 1 et de transmettre ledit couple au compresseur 2. Ledit dispositif de transmission 3 est apte à transmettre ledit couple avec un premier rapport de transmission jusqu'à un certain seuil de régime moteur et à ne plus le transmettre ou à le transmettre avec un rapport de transmission plus faible au dessus dudit seuil.

On peut ainsi utiliser un compresseur qui n'aura pas à souffrir des contraintes de rotation à très grande vitesse, par exemple en évitant des vitesses supérieures à 150000 tours/minute.

Ledit seuil de régime moteur est compris, par exemple, entre 2000 et 3000 tours/minute. Il est, notamment, d'environ 2500 tours/minute. Le compresseur peut alors seconder le turbo compresseur sur les plages où celui-ci est justement défaillant.

Le compresseur 2 est constitué, par exemple, d'un compresseur centrifuge présentant une roue à aubes 21, liée à un arbre d'entrainement 22, connu de l'homme de l'art. Ladite roue est, par exemple, entraînée par un dispositif de démultiplication 23 interne au compresseur, notamment du type celui décrit dans le document WO 02/064997. Ledit dispositif est utilisé, par exemple, dans une configuration où il présente un rapport de démultiplication d'environ 10 à 15.

Ledit dispositif de transmission 3 conforme à l'invention pourra présenter quant à lui un rapport de démultiplication d'environ 6 entre l'organe menant, ici la courroie 9 du moteur 1 et l'organe mené, ici une roue d'entrée 16 du dispositif de démultiplication du compresseur 2. Autrement dit la roue d'entrée 16 tournera environ six fois plus vite que le vilebrequin du moteur.

Comme illustré aux figures suivantes, l'invention concerne également un dispositif de transmission d'un couple mécanique entre un organe menant et un organe mené. Celui-ci trouvera son utilité aussi bien dans les applications décrites plus haut que, plus largement, dans tout système mécanique employant un organe menant entrainant en rotation un organe mené, en particulier un organe mené dont on veut qu'il ne soit pas entrainé à des vitesses excessives lors des montés en régime de l'organe menant.

Ledit dispositif de transmission comprend au moins une poulie 10, 11, 12, 13 de transmission du couple entre l'organe menant, ici la courroie 9, et l'organe mené, ici la roue d'entrée 16 du dispositif de démultiplication 23 du compresseur 2, et des moyens de débrayage 17 agissant sur au moins l'une 11 desdites poulies pour permettre une transmission du couple entre l'organe menant et l'organe mené lorsqu'ils sont dans un état embrayé, ou non, lorsqu'ils sont dans un état débrayé.

Les moyens de débrayage comprennent, par exemple, un premier organe rotatif 18, apte à être entrainé en rotation par l'organe menant, et des premiers moyens 19 d'accouplement / désaccouplement en rotation de la ou l'une desdites poulies, dite première poulie à embrayage 11, avec ledit premier organe rotatif 18.

Les premiers moyens 19 d'accouplement / désaccouplement comprennent une bobine 20, générant un champ électromagnétique, ledit premier organe rotatif 18, ladite première poulie à embrayage 11 et ladite bobine 20 étant configurés pour permettre l'entrainement de ladite poulie 11 par ledit organe rotatif 18 lorsque ladite bobine est alimentée en courant électrique. Ledit organe rotatif 18 est constitué, notamment, d'un disque en matériau ferromagnétique tandis que la bobine 20 est orientée selon un axe perpendiculaire audit disque passant par son centre, ledit axe étant aussi l'axe de rotation de ladite première poulie d'embrayage 11. L'alimentation en courant électrique de la bobine 20 a pour effet de coller ledit disque contre ladite poulie 11 et permet son entrainement en rotation.

L'une de la ou desdites poulies, dites poulies de changement de régime, pourra présenter un rapport de réduction et/ou de démultiplication permettant d'entrainer l'organe mené à une vitesse différente de celle de l'organe menant. Il s'agit, par exemple, d'un rapport de démultiplication permettant d'entrainer l'organe mené plus vite que l'organe menant.

Ladite première poulie à embrayage 11 est, par exemple, la ou l'une des poulies de changement de régime.

Ladite première poulie à embrayage 11 est apte à entrainer l'organe mené. Elle présente, notamment, un rapport de démultiplication de deux. Autrement dit, dans l'application illustrée, ladite première poulie à embrayage 11 entraine la roue d'entrée 16 du dispositif démultiplicateur 23 deux fois plus vite que sa propre vitesse.

Pour cela, le dispositif comprend, par exemple, une courroie additionnelle 24, reliée à ladite première poulie à embrayage 11, ladite courroie additionnelle 24 étant apte à être reliée à l'organe mené.

L'une 10 desdites poulies, dites première poulie d'entrée, et ladite première poulie à embrayage 11 sont, par exemple, montées libres en rotation autour d'un même arbre 26, fixe, ladite première poulie à embrayage 11 étant liée en rotation à ladite première poulie d'entrée 10.

Ladite première poulie d'entrée 10 pourra être la ou l'une des poulies de changement de régime.

Ledit premier organe rotatif 18 ou la ou l'une des poulies, notamment la première poulie d'entrée 10, est prévue apte à être entrainée par l'organe menant. Et la première poulie d'entrée 10 présente un rapport de démultiplication, par exemple, de trois. Autrement dit, dans l'application illustrée, la première poulie d'entrée 10 tourne trois fois plus vite que le vilebrequin du moteur.

La ou lesdites poulies de changement de régime 10, 11 assurent de la sorte un rapport de démultiplication d'environ six entre le vilebrequin du moteur et l'arbre d'entrée 16 du dispositif démultiplicateur 23 pour le compresseur 2. On arrive ainsi, avec le dispositif démultiplicateur 23, à un rapport de réduction d'environ 80 entre le vilebrequin et l'arbre d'entrainement 22.

Ladite première poulie d'entrée 10 pourra être une poulie apte à fonctionner en roue libre. Ceci présente l'avantage, notamment, d'éviter les retours de couple de l'organe mené vers l'organe menant. De tels retours de couple peuvent se produire, avec des compresseurs d'air d'alimentation d'un moteur en cas d'arrêt de la consigne d'accélération du véhicule.

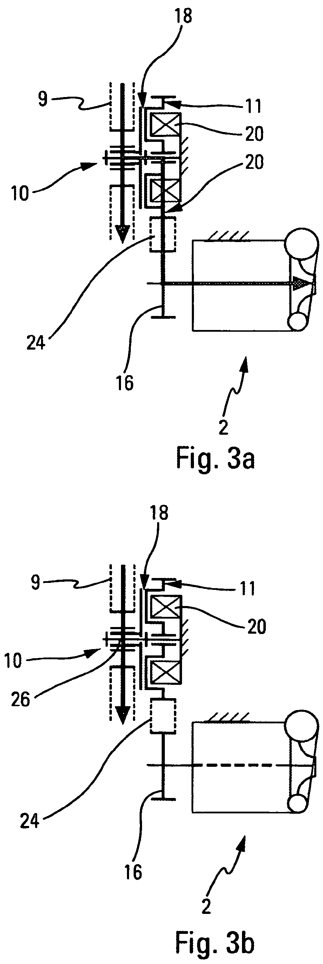

Comme illustré aux figures 3a, 5a et 7a, lorsque la première poulie à embrayage 11 est embrayée sur l'organe rotatif 18, autrement dit quand la bobine 20 est alimentée, le couple mécanique est transmis de l'organe menant, ici la courroie 9, à la première poulie d'entrée 10, de cette dernière à l'organe rotatif 18, de ce dernier à la poulie à embrayage 11, de cette dernière à la courroie additionnelle 24 et de cette dernière à l'organe mené, ici la roue d'entrée 16 du dispositif démultiplicateur 23 pour le compresseur 2, comme cela est illustré par la flèche repéré 25.

A l'inverse, comme illustré aux figures 3b, 5b et 7b, lorsque la première poulie à embrayage 11 est débrayée, autrement dit lorsque la bobine 20 n'est pas alimentée, le couple mécanique n'est pas transmis de l'organe menant à l'organe mené, ou est transmis par un chemin différent.

A ce sujet, selon le mode de réalisation des figures 2 et 3, le couple mécanique n'est pas transmis de l'organe menant à l'organe mené, la transmission du couple restant au niveau de la première poulie d'entrée 10.

Cela étant, comme illustré aux figures suivantes, l'invention permet d'entraîner l'organe mené selon au moins deux vitesses différentes pour une même vitesse de rotation de l'organe menant.

Pour cela le dispositif de transmission conforme à l'invention comprend une poulie 12, dite seconde poulie d'entrée, apte à fonctionner en roue libre, ledit dispositif étant configuré pour que ladite seconde poulie d'entrée 12 puisse transmettre le couple moteur à l'organe mené lorsque lesdits moyens de débrayages 17 sont dans un état débrayé. Autrement dit, le couple est transmis sans passer par les moyens de débrayage 17.

Ladite seconde poulie d'entrée 12 présente un rapport de réduction et/ou de démultiplication différent de celui présenté par le dispositif quand le couple est transmis par les moyens de débrayage 17.

Ladite seconde poulie d'entrée 12 est apte à être entrainée par l'organe menant. Elle présente, par exemple, le même rapport de démultiplication que la première poulie d'entrée 10, à savoir, par exemple, un rapport de démultiplication de trois. Autrement dit, dans l'application illustrée, elle tourne trois fois plus vite que le vilebrequin moteur.

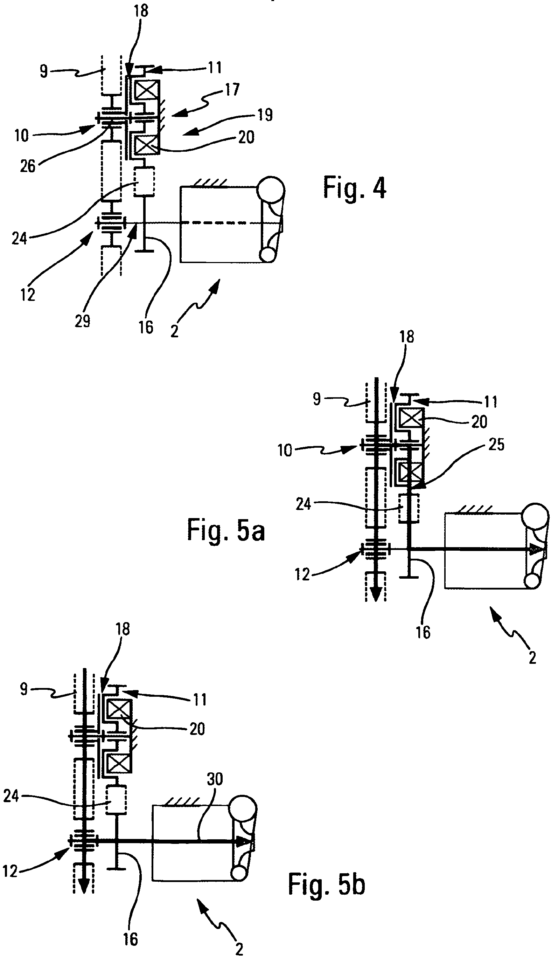

Comme illustré aux figures 4 et 5, ladite seconde poulie d'entrée 12 est liée en rotation, par exemple, à l'organe mené, notamment en étant apte à être monté sur un même arbre 29.

Selon ce mode de réalisation, comme illustré à la figure 5a et comme indiqué plus haut, lorsque la première poulie à embrayage 11 est embrayée sur l'organe rotatif 18, autrement dit quand la bobine 20 est alimentée, le couple mécanique est transmis de l'organe menant, ici la courroie 9, à l'organe mené, ici la roue d'entrée 16 du dispositif démultiplicateur 23 pour le compresseur 2, par l'intermédiaire de la première poulie d'entrée 10, de l'organe rotatif 18, de la poulie à embrayage 11, et de la courroie additionnelle 24, ceci avec un premier rapport de démultiplication, provenant du rapport de démultiplication assurée par la première poulie d'entrée 10 et la première poulie d'embrayage 11, ici un rapport de six. La seconde poulie d'entrée 12 est en conséquence entrainée plus rapidement par l'organe mené que par l'organe menant et fonctionne en roue libre.

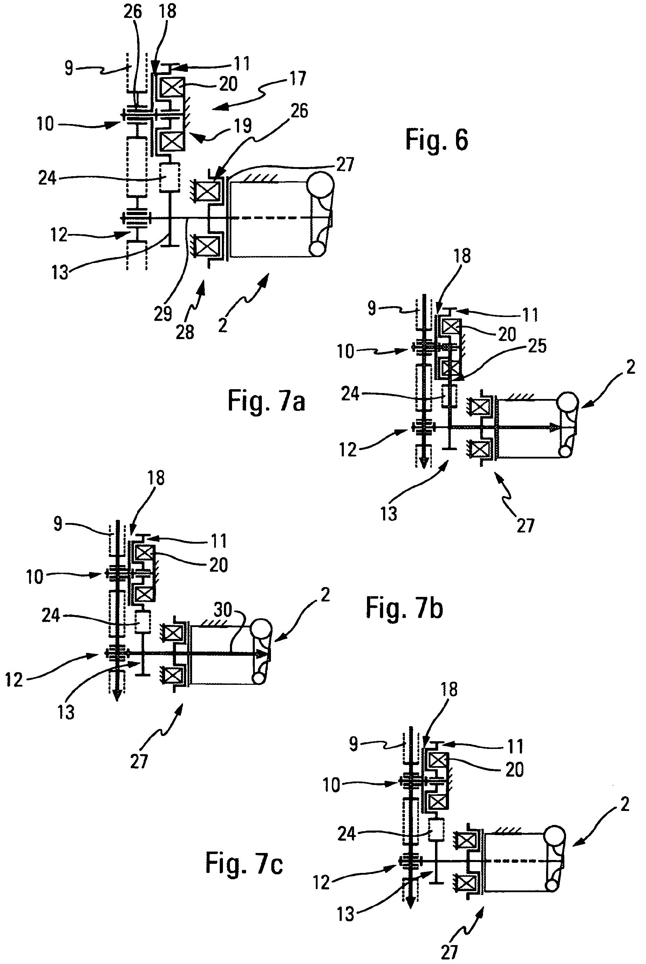

Par contre, comme illustré aux figures 5b et 7b, lorsque la première poulie à embrayage 11 est débrayée, le couple est transmis de l'organe menant à l'organe mené par ladite seconde roue d'entrée 12, ceci avec rapport de réduction provenant uniquement de celui de la seconde poulie d'entrée 12, ici un rapport de réduction de trois, comme illustré par la flèche repérée 30. La première poulie d'embrayage 11 tourne certes mais uniquement sous l'action de l'organe mené.

Autrement dit, lorsque les moyens de débrayage sont activés, l'organe mené est entrainé deux fois moins vite que lorsque le premier organe rotatif 18 est en prise avec la première poulie de débrayage 11. Encore autrement dit, dans l'application illustrée, le rapport de démultiplication entre le vilebrequin et l'arbre d'entrainement 22 du compresseur est d'environ 40 lorsque les moyens de débrayage 17 sont activés et de 80 lorsqu'ils ne le sont pas.

On pourra alors envisager d'utiliser le compresseur 2 également pour des régimes moteur plus élevés, ce qui permettra de se passer d'un turbo compresseur.

Comme illustré aux figures 6 et 7, selon un autre mode de réalisation, on pourra encore prévoir une troisième poulie 13, liée en rotation à la seconde poulie d'entrée 12 et entrainée en rotation par ladite première poulie à embrayage 11, par exemple par ladite courroie additionnelle 24, et des moyens de débrayage supplémentaires 26, prévus entre ladite troisième poulie 13 et l'organe mené, ici un arbre d'entrée du dispositif démultiplicateur pour le compresseur, de façon à permettre l'entrainement de l'organe mené par ladite troisième poulie 12 ou non.

On peut ainsi combiner les modes de fonctionnement des deux modes de réalisation précédents. En effet, selon une première configuration, correspondant aux figures 7a et 7b, les moyens de débrayage supplémentaires 26 laissent passer le couple entre la troisième poulie 13 et l'organe mené, et, en fonction de l'état des moyens de débrayage 17, le dispositif de transmission transmet du couple de l'organe menant à l'organe mené selon un premier ou un second rapport de réduction. Selon une autre configuration, correspondant à celui de la figure 7c, les moyens de débrayage supplémentaires 26 sont activés, empêchant le passage du couple entre ladite troisième poulie 13 et l'organe mené, et l'organe mené n'est pas entraîné par l'organe menant.

Les moyens de débrayage supplémentaires 26 comprennent, par exemple, un second organe rotatif 27, apte à être lié en rotation à l'organe mené, et des seconds moyens 28 d'accouplement / désaccouplement en rotation de ladite troisième poulie 13 avec ledit second organe rotatif 27.

Les seconds moyens 28 d'accouplement / désaccouplement pourront être similaires aux premiers moyens d'accouplement / désaccouplement 19.

Ladite seconde poulie d'entrée 12, ladite troisième poulie 13 et le second organe rotatif 27 sont prévus, par exemple, sur un même arbre 29.

Selon l'application illustrée, les moyens de débrayage 17 sont configurés pour être activés en fonction du régime moteur seuil évoqué plus haut. Ils pourront pour cela comprendre, par exemple, un dispositif de commande ouvrant ou fermant un interrupteur prévu entre la bobine 20 et sa source d'alimentation en cas de franchissement dudit seuil.

Pour le montage du dispositif de transmission, des galets tendeurs pourront être prévus.

Dans un exemple particulier du système décrit en figure 1, la première 10 et la seconde 12 poulies sont des poulies d'un alternateur, notamment d'un véhicule automobile ; et la poulie à embrayage 11 est une poulie de compresseur de climatisation.

## Revendications

1. Dispositif de transmission d'un couple mécanique entre un organe menant et un organe mené, notamment entre un moteur thermique (1) et un compresseur (2) d'air d'alimentation du moteur, ledit dispositif de transmission comprenant
au moins une première poulie (10, 11) de transmission du couple entre l'organe menant et l'organe mené ;
des moyens (17) de débrayage agissant sur au moins l'une desdites premières poulies (10, 11) pour permettre une transmission du couple entre l'organe menant et l'organe mené, lorsqu'ils sont dans un état embrayé, ou non, lorsqu'ils sont dans un état débrayé ; et
étant **caractérisé en ce qu'**il comprend une poulie (12), dite seconde poulie d'entrée, apte à fonctionner en roue libre, et **en ce que** ledit dispositif est configuré pour que ladite seconde poulie d'entrée (12) puisse transmettre le couple de l'organe menant à l'organe mené, lorsque lesdits moyens de débrayage (17) sont dans un état débrayé.

2. Dispositif selon la revendication 1 dans lequel les moyens (17) de débrayage comprennent un premier organe rotatif (18), apte à être entraîné en rotation par l'organe menant et des premiers moyens (19) d'accouplement / désaccouplement en rotation de la ou l'une desdites premières poulies, dite première poulie à embrayage (11), avec ledit premier organe rotatif (18).

3. Dispositif selon la revendication 2 dans lequel les moyens (19) d'accouplement / désaccouplement comprennent une bobine (20) générant un champ électromagnétique, ledit premier organe rotatif (18), ladite première poulie à embrayage (11) et ladite bobine (20) étant configurés pour permettre l'entrainement de ladite poulie (11) par ledit organe rotatif (18) lorsque ladite bobine (20) est alimentée en courant électrique.

4. Dispositif selon l'une des revendications 2 ou 3 comprenant une courroie additionnelle (24), reliée à ladite première poulie à embrayage (11), ladite courroie additionnelle (24) étant apte à être reliée à l'organe mené.

5. Dispositif selon l'une quelconque des revendications 2 à 4 dans lequel l'une desdites premières poulies, dite première poulie d'entrée (10), et ladite première poulie à embrayage (11) sont montées libres en rotation autour d'un même arbre (26), ladite première poulie à embrayage (11) étant liée en rotation à ladite première poulie d'entrée (10).

6. Dispositif selon la revendication 5 dans lequel ladite première poulie d'entrée (10) est une poulie apte à fonctionner en roue libre.

7. Dispositif selon l'une quelconque des revendications 1 à 6 dans lequel ladite seconde poulie d'entrée (12) présente un rapport de réduction et/ou de démultiplication différent de celui présenté par le dispositif quand le couple est transmis par les moyens (17) de débrayage.

8. Dispositif selon l'une quelconque des revendications 2 à 7 comprenant une troisième poulie (13), liée en rotation à la seconde poulie d'entrée (12) et entrainée en rotation par ladite première poulie à embrayage (11), et des moyens de débrayage supplémentaires (27), prévus entre ladite troisième poulie (13) et l'organe mené de façon à permettre l'entrainement de l'organe mené par ladite troisième poulie (13) ou non.

9. Dispositif selon la revendication 8 dans lequel les moyens de débrayage supplémentaires (27) comprennent un second organe rotatif (28), apte à être lié en rotation à l'organe mené, et des seconds moyens (29) d'accouplement / désaccouplement en rotation de ladite troisième poulie (13) avec ledit second organe rotatif (28).

10. Dispositif selon l'une quelconque des revendications 1 à 9 dans lequel au moins l'une desdites poulies (10, 11, 12, 13), dite poulie de changement de régime, présente un rapport de réduction et/ou de démultiplication permettant d'entraîner l'organe mené à une vitesse différente de celle de l'organe menant.

11. Dispositif selon la revendication 10 dans lequel ladite première poulie d'entrée (10) est la ou l'une des poulies de changement de régime.

12. Dispositif selon la revendication 10 dans lequel ladite première poulie à embrayage (11) est la ou l'une des poulies de changement de régime.

13. Système de compression de l'air d'alimentation d'un moteur thermique (1), notamment de véhicule automobile, comprenant un compresseur (2) et un dispositif de transmission de couple (3), permettant de prélever un couple sur une courroie (9) entrainée par un vilebrequin (14) du moteur (1) et de transmettre ledit couple au compresseur (2), **caractérisé en ce que** ledit dispositif de transmission (3) est conforme à celui de l'une quelconque des revendications 1 à 12 et est apte à transmettre ledit couple avec un premier rapport de transmission jusqu'à un certain seuil de régime moteur et à ne plus le transmettre ou à le transmettre avec un rapport de transmission plus faible au dessus dudit seuil.

## Patentansprüche

1. Vorrichtung zur Übertragung eines mechanischen Drehmoments zwischen einem Antriebselement und einem angetriebenen Element, insbesondere zwischen einem Wärmemotor (1) und einem Kompressor (2) der Zufuhrluft des Motors, wobei die Vorrichtung zur Übertragung Folgendes aufweist:
mindestens eine erste Riemenscheibe (10, 11) zur Übertragung des Drehmoments zwischen dem Antriebselement und dem angetriebenen Element;
Mittel (17) zum Ausrücken, die auf mindestens eine der ersten Riemenscheiben (10, 11) einwirken, um eine Übertragung des Drehmoments zwischen dem Antriebselement und dem angetriebenen Element zu ermöglichen, wenn sie in einem eingerückten Zustand sind, oder nicht, wenn sie in einem ausgerückten Zustand sind; und
**dadurch gekennzeichnet, dass** sie eine Riemenscheibe (12), die sogenannte zweite Eintritts-Riemenscheibe, aufweist, die geeignet ist, freilaufend zu funktionieren, und dass die Vorrichtung so konfiguriert ist, dass die zweite Eintritts-Riemenscheibe (12) das Drehmoment von dem Antriebselement auf das angetriebene Element übertragen kann, wenn die Mittel zum Ausrücken (17) in einem ausgerückten Zustand sind.

2. Vorrichtung nach Anspruch 1, wobei die Mittel (17) zum Ausrücken ein erstes Drehorgan (18), das geeignet ist, durch das Antriebselement in Drehung versetzt zu werden, und erste Mittel (19) zum Einkuppeln/Auskuppeln in Drehung der oder einer der ersten Riemenscheiben, die sogenannte erste Kupplungs-Riemenscheibe (11), mit dem ersten Drehorgan (18) aufweisen.

3. Vorrichtung nach Anspruch 2, wobei die Mittel (19) zum Einkuppeln/Auskuppeln eine Spule (20) aufweisen, die ein elektromagnetisches Feld erzeugt, wobei das erste Drehorgan (18), die erste Kupplungs-Riemenscheibe (11) und die Spule (20) konfiguriert sind, um den Antrieb der Riemenscheibe (11) durch das Drehorgan (18) zu ermöglichen, wenn die Spule (20) mit elektrischem Strom versorgt wird.

4. Vorrichtung nach einem der Ansprüche 2 oder 3, umfassend einen zusätzlichen Riemen (24), der mit der ersten Kupplungs-Riemenscheibe (11) verbunden ist, wobei der zusätzliche Riemen (24) geeignet ist, um mit dem angetriebenen Element verbunden zu werden.

5. Vorrichtung nach einem der Ansprüche 2 bis 4, wobei die eine der ersten Riemenscheiben, die sogenannte erste Eintritts-Riemenscheibe (10), und die erste Kupplungs-Riemenscheibe (11) frei drehbar um eine gleiche Welle (26) angebracht sind, wobei die erste Kupplungs-Riemenscheibe (11) drehbar mit der ersten Eintritts-Riemenscheibe (10) verbunden ist.

6. Vorrichtung nach Anspruch 5, wobei die erste Eintritts-Riemenscheibe (10) eine Riemenscheibe ist, die geeignet ist, freilaufend zu funktionieren.

7. Vorrichtung nach einem der Ansprüche 1 bis 6, wobei die zweite Eintritts-Riemenscheibe (12) ein Untersetzungsverhältnis und/oder Übersetzungsverhältnis aufweist, das sich von jenem unterscheidet, das die Vorrichtung aufweist, wenn das Drehmoment durch die die Mittel (17) zum Ausrücken übertragen wird.

8. Vorrichtung nach einem der Ansprüche 2 bis 7, umfassend eine dritte Riemenscheibe (13), die drehbar mit der zweiten Eintritts-Riemenscheibe (12) verbunden ist und durch die erste Kupplungs-Riemenscheibe (11) in Drehung versetzt wird, und zusätzliche Mittel zum Ausrücken (27), die zwischen der dritten Riemenscheibe (13) und dem angetriebenen Element vorgesehen sind, um den Antrieb des angetriebenen Elements durch die dritte Riemenscheibe (13) zu ermöglichen oder nicht.

9. Vorrichtung nach Anspruch 8, wobei die zusätzlichen Mittel zum Ausrücken (27) ein zweites Drehorgan (28), das geeignet ist, drehbar mit dem angetriebenen Element verbunden zu werden, und zweite Mittel (29) zum Einkuppeln/Auskuppeln in Drehung der dritten Riemenscheibe (13) mit dem zweiten Drehorgan (28) aufweisen.

10. Vorrichtung nach einem der Ansprüche 1 bis 9, wobei die mindestens eine der Riemenscheiben (10, 11, 12, 13), die sogenannte Riemenscheibe zur Drehzahländerung, ein Übersetzungsverhältnis und/oder Untersetzungsverhältnis aufweist, das es ermöglicht, das angetriebene Element in eine andere Geschwindigkeit als jene des Antriebselements zu versetzten.

11. Vorrichtung nach Anspruch 10, wobei die erste Eintritts-Riemenscheibe (10) die oder eine der Riemenscheiben zur Drehzahländerung ist.

12. Vorrichtung nach Anspruch 10, wobei die erste Kupplungs-Riemenscheibe (11) die oder eine der Riemenscheiben zur Drehzahländerung ist.

13. Luftverdichtungssystem zur Energieversorgung eines Wärmemotors (1), insbesondere eines Kraftfahrzeugs, umfassend einen Kompressor (2) und eine Vorrichtung zur Übertragung des Drehmoments (3), die es ermöglicht, ein Drehmoment an einem Riemen (9) zu entnehmen, der durch eine Kurbelwelle (14) des Motors (1) angetrieben ist, und das Drehmoment zu dem Kompressor (2) zu übertragen, **dadurch gekennzeichnet, dass** die Vorrichtung zur Übertragung (3) jener nach einem der Ansprüche 1 bis 12 entspricht und geeignet ist, das Drehmoment mit einem ersten Übersetzungsverhältnis bis zu einem bestimmten Schwellenwert der Drehzahl des Motors zu übertragen und es nicht mehr zu übertragen oder mit einem niedrigeren Übersetzungsverhältnis unter dem Schwellenwert zu übertragen.

## Claims

1. Device for transmitting a mechanical torque between a driving member and a driven member, notably between a heat engine (1) and an air compressor (2) supplying the engine, said transmission device comprising
at least one first pulley (10, 11) transmitting the torque between the driving member and the driven member;
disengaging means (17) acting on at least one of said first pulleys (10, 11) to allow for a transmission of the torque between the driving member and the driven member, when they are in an engaged state, or not, when they are in a disengaged state; and
being **characterized in that** it comprises a pulley (12), called second input pulley, capable of operating in freewheeling mode, and **in that** said device is configured so that said second input pulley (12) can transmit the torque from the driving member to the driven member, when said disengaging means (17) are in a disengaged state.

2. Device according to Claim 1, in which the disengaging means (17) comprise a first rotary member (18), capable of being driven in rotation by the driving member, and first means (19) for rotationally coupling/uncoupling the or one of said first pulleys, called first engaging pulley (11), with said first rotary member (18).

3. Device according to Claim 2, in which the coupling/uncoupling means (19) comprise a winding (20) generating an electromagnetic field, said first rotary member (18), said first engaging pulley (11) and said winding (20) being configured to allow said pulley (11) to be driven by said rotary member (18) when said winding (20) is powered by electrical current.

4. Device according to either of Claims 2 and 3, comprising an additional belt (24), linked to said first engaging pulley (11), said additional belt (24) being capable of being linked to the driven member.

5. Device according to any one of Claims 2 to 4, in which one of said first pulleys, called first input pulley (10), and said first engaging pulley (11) are mounted free to rotate about one and the same shaft (26), said first engaging pulley (11) being linked in rotation to said first input pulley (10).

6. Device according to Claim 5, in which said first input pulley (10) is a pulley capable of operating in freewheeling mode.

7. Device according to any one of Claims 1 to 6, in which said second input pulley (12) has a speed-reducing and/or gearing-down ratio different from that of the device when the torque is transmitted by the disengaging means (17).

8. Device according to any one of Claims 2 to 7, comprising a third pulley (13), linked in rotation to the second input pulley (12) and driven in rotation by said first engaging pulley (11), and supplementary disengaging means (27), provided between said third pulley (13) and the driven member so as to allow the driven member to be driven by said third pulley (13) or not.

9. Device according to Claim 8, in which the supplementary disengaging means (27) comprise a second rotary member (28), capable of being linked in rotation to the driven member, and second means (29) for rotationally coupling/uncoupling said third pulley (13) with said second rotary member (28).

10. Device according to any one of Claims 1 to 9, in which at least one of said pulleys (10, 11, 12, 13), called speed change pulley, has a speed-reducing and/or gearing-down ratio making it possible to drive the driven member at a speed different from that of the driving member.

11. Device according to Claim 10, in which said first input pulley (10) is the or one of the speed change pulleys.

12. Device according to Claim 10, in which said first engaging pulley (11) is the or one of the speed change pulleys.

13. Air-compression system supplying a heat engine (1), notably of a motor vehicle, comprising a compressor (2) and a torque transmission device (3), making it possible to take a torque from a belt (9) driven by a crankshaft (14) of the engine (1) and to transmit said torque to the compressor (2), **characterized in that** said transmission device (3) conforms to that of any one of claims 1 to 12 and is capable of transmitting said torque with a first transmission ratio up to a certain engine speed threshold and of no longer transmitting it or of transmitting it with a lower transmission ratio above said threshold.
